# EUROPEAN PATENT APPLICATION

(11) **EP 4 810 986 A1**
(43) Date of publication of application: **23.09.2026**
(21) Application number: 26162809.3
(22) Date of filing: 06.03.2026
(51) Int. Cl.: G01S 7/48, G01S 17/89, G01S 17/931, G06N 3/045

(54) **SYSTEM AND METHOD FOR GENERATING THREE-DIMENSIONAL DEPTH MAP OF OPERATIONAL AREA**

(30) Priority: 20.03.2025 FI 20255238
(71) Applicant: Unikie Oy, 33720 Tampere (FI)
(72) Inventor: Sormunen, Toni, 33880 Lempäälä (FI)
(74) Representative: Moosedog Oy

(57) **Abstract**

Disclosed is a system (200) for generating a three-dimensional (3D) depth map of a 3D operational area (102) of an autonomous vehicle (104). The system comprises a plurality of Light Detection and Ranging (LiDAR) sensors (106a-c, 202a-c) installed in an infrastructure within the 3D operational area. The LiDAR sensors are arranged such that the entirety of the 3D operational area is covered by the sensing zones. The system further comprises at least one camera (108a-d, 204a-d) arranged within the 3D operational area. The system also includes at least one processor (110, 206). The processor is configured to receive LiDAR data from the plurality of LiDAR sensors, in real-time. The LiDAR data comprises 3D point clouds of the 3D operational area. The processor is also configured to receive images captured by the at least one camera, in real-time, representing the 3D operational area. The processor employs at least one data fusion algorithm to integrate the LiDAR data and the images, in real-time. The processor is further configured to generate a 3D depth map of the 3D operational area based on the integrated data.

## Description

### TECHNICAL FIELD

The present disclosure relates to systems for generating three-dimensional (3D) depth maps of 3D operational areas of autonomous vehicles. Moreover, the present disclosure relates to methods for generating 3D depth maps of 3D operational areas of autonomous vehicles.

### BACKGROUND

Remote driving technology is an emerging field that enables vehicles to be controlled from a distance, often in complex environments such as ports, warehouses, restricted areas, and industrial facilities. In these environments, vehicles must navigate predefined routes while avoiding obstacles, pedestrians, and other hazards, performing tasks such as loading, unloading, transporting goods.

Light Detection and Ranging sensors (LiDARs) are widely used in autonomous navigation for depth sensing, providing precise distance measurements to ensure safe and accurate vehicle movement. LiDAR technology is particularly beneficial in complex environments, where reliable object detection is essential. However, existing LiDAR-based systems face significant challenges, particularly in detecting small and/or low-reflective objects such as thin poles, small debris, and wires. These objects often fail to reflect enough light, resulting in detection failures that pose safety risks.

Conventional attempts to mitigate these challenges include increasing the power of LiDAR lasers or using multiple sensors to cover a larger area.

However, these approaches introduce additional drawbacks, such as increased costs, higher computational demand, and reduced sensor accuracy due to interference. Even with such enhancements, LiDAR sensors continue to struggle with detecting small, thin, or low-reflective objects, making autonomous navigation in complex environments a persistent challenge.

Additionally, LiDAR sensors often fail to detect highly reflective or transparent objects, leading to inaccurate distance estimations. Camera-based systems have been introduced to complement LiDAR technology by capturing visual information, but they lack sufficient depth accuracy, especially in low-light or adverse weather conditions.

Therefore, in light of the foregoing discussion, there exists a need to overcome the aforementioned drawbacks.

### SUMMARY

The aim of the present disclosure is to provide a system and a method for generating a three-dimensional (3D) depth map of a 3D operational area of an autonomous vehicle to accurately detect small objects (i.e., small debris, wires, thin poles, or similar) in complex environments by combining data from a plurality of Light Detection and Ranging (LiDAR) sensors and at least one camera, thereby enhancing detection reliability and precision.

The aim of the present disclosure is achieved by a system and a method for generating a 3D depth map of a 3D operational area of an autonomous vehicle, as defined in the appended independent claims to which reference is made to. Advantageous features are set out in the appended dependent claims.

The embodiments of the present disclosure substantially enable improvements in small-object detection, depth perception, and real-time navigation for autonomous vehicles operating in complex environments. The integration of multiple sensors enhances the system's ability to detect thin, low-reflectivity, and partially transparent objects, thereby improving operational safety and efficiency.

Additional aspects, advantages, features, and objects of the present disclosure will become apparent from the drawings and the detailed description of the illustrative embodiments constructed in conjunction with the appended claims that follow.

### BRIEF DESCRIPTION OF THE DRAWINGS

FIG. 1 illustrates a real-world environment where a system for generating a three-dimensional (3D) depth map of a 3D operational area of an autonomous vehicle is used, in accordance with an embodiment of the present disclosure;
FIG. 2 illustrates a block diagram of an architecture of a system for generating a three-dimensional (3D) depth map of a 3D operational area of an autonomous vehicle, in accordance with an embodiment of the present disclosure;
FIG. 3 illustrates steps of a method for generating a three-dimensional (3D) depth map of a 3D operational area of an autonomous vehicle, in accordance with an embodiment of the present disclosure; and
FIG. 4 illustrates an exemplary process flow in a system for generating a three-dimensional (3D) depth map of a 3D operational area, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a system for generating a three-dimensional (3D) depth map of a 3D operational area of an autonomous vehicle, the system comprising:
a plurality of Light Detection and Ranging (LiDAR) sensors installed in an infrastructure within the 3D operational area, and arranged such that an entirety of the 3D operational area is covered by sensing zones of one or more of the LiDAR sensors;
at least one camera arranged within the 3D operational area; and
at least one processor configured to:
   receive LiDAR data generated by the plurality of LiDAR sensors, in real-time, wherein the LiDAR data comprises a plurality of 3D point clouds of the 3D operational area;
   receive a plurality of images captured by the at least one camera, in real-time, wherein the plurality of images visually represent the 3D operational area;
   employ at least one data fusion algorithm to integrate the LiDAR data and the plurality of images, in real-time, for generating the 3D depth map of the 3D operational area;
**characterised in that** the at least one processor is further configured to process the LiDAR data received from the plurality of LiDAR sensors, prior to employing the at least one data fusion algorithm, wherein when processing the LiDAR data, the at least one processor is configured to:
   generate a merged 3D point cloud by combining the plurality of 3D point clouds according to pre-known extrinsic calibration of the plurality of LiDAR sensors;
   downsample the merged 3D point cloud using a voxel filter and store the merged 3D point cloud in a predefined data structure;
   detect a background, static points, and dynamic points in the merged 3D point cloud, by comparing the merged 3D point cloud with at least one historical merged 3D point cloud;
   subtract the background and the static points from the merged 3D point cloud; and
   identify a set of dynamic objects using the merged 3D point cloud by employing at least one point clustering technique to generate one or more clusters of the dynamic points.

In a second aspect, the present disclosure provides a method for generating a three-dimensional (3D) depth map of a 3D operational area of an autonomous vehicle, wherein the method comprising:
receiving LiDAR data generated by plurality of LiDAR sensors installed in an infrastructure within the 3D operational area, the LiDAR sensors being arranged such that an entirety of the 3D operational area is covered by sensing zones of one or more of the LiDAR sensors, in real-time, wherein the LiDAR data comprising a plurality of 3D point clouds of the 3D operational area;
receiving a plurality of images captured by at least one camera arranged within the 3D operational area, in real-time, wherein the plurality of images visually represent the 3D operational area;
employing at least one data fusion algorithm to integrate the LiDAR data and the plurality of images, in real-time, for generating the 3D depth map of the 3D operational area;
**characterised in that** prior to employing the at least one data fusion algorithm, wherein when processing the LiDAR data, the method further comprising:
generating a merged 3D point cloud by combining the plurality of 3D point clouds according to pre-known extrinsic calibration of the plurality of LiDAR sensors;
downsampling the merged 3D point cloud using a voxel filter and store the merged 3D point cloud in a predefined data structure;
detecting a background, static points, and dynamic points in the merged 3D point cloud, by comparing the merged 3D point cloud with at least one historical merged 3D point cloud;
subtracting the background and the static points from the merged 3D point cloud; and
identifying a set of dynamic objects using the merged 3D point cloud by employing at least one point clustering technique to generate one or more clusters of the dynamic points.

The present disclosure provides the aforementioned first aspect and the aforementioned second aspect for generating the three-dimensional (3D) depth map of the 3D operational area of the autonomous vehicle. Herein, by integrating data from the plurality of Light Detection and Ranging (LiDAR) sensors and the at least one camera, the at least one processor combines high-accuracy depth measurements provided by said LiDAR sensors with high visual information captured by said camera. This data fusion ensures precise and detailed mapping of the 3D operational area, improving ability of the system to accurately detect and represent objects (like small debris, wires, thin poles, or similar) of varying sizes, shapes, and reflectivity. The combined use of the plurality LiDAR sensors and the at least one camera addresses limitations of LiDAR sensors in detecting small, thin, and/or low-reflective objects. In this regard, the plurality of images captured by the at least one camera enhances ability of the system to identify these objects by providing additional visual context, thereby ensuring safer navigation in complex environments. It will be appreciated that such an approach enables continuous and instantaneous updates to the 3D depth map, allowing the autonomous vehicle to adapt to dynamic environments and respond promptly to changes (such as a sudden appearance of obstacles, and the like). It will also be appreciated that integration of the LiDAR data and the plurality of images captured by the at least one camera makes the system more robust in scenarios where the LiDAR sensor alone may struggle, such as in detecting transparent or highly reflective surfaces. The architecture of the system, involving the plurality of LiDAR sensors and the at least one camera, is scalable and can be adapted to different 3D operational areas and vehicle configurations. This flexibility makes it suitable for a wide range of applications, including industrial ports, warehouse environments, and similar. Additionally, such an approach of integration of the plurality of LiDAR sensors and the at least one camera enhances an overall cost-effectiveness of the system while maintaining required safety standards. Moreover, the system and method are designed to provide the 3D depth map of the 3D operational area that seamlessly integrates with navigation of the autonomous vehicle. This ensures that the autonomous vehicle can use the 3D depth map to make real-time decisions for obstacle avoidance, route optimization, task execution, and similar. The system and the method are fast, robust, easy to implement, and facilitates reliable, real-time remote driving of the vehicle.

Throughout the present disclosure, the term *"three-dimensional depth map"* refers to a digital representation of a physical environment, where each point in said map contains spatial information about depth or distance of the objects relative to a reference point, such as the plurality of LiDAR sensors and/or the at least one camera. The 3D depth map is created by capturing depth data across the 3D operational area and mapping it in three dimensions, represented as a grid or mesh of points. Each point includes coordinates (i.e., x, y, z) that define a position of the objects in space, wherein x represents a horizontal position along x-axis, y represents a horizontal position along y-axis, and z represents a vertical position along z-axis. This 3D depth map allows the system to accurately perceive structure, distance, and spatial relationships of the objects in the 3D operational area. The term *"three-dimensional operational area"* refers to a defined physical space or a controlled real-world environment within which the autonomous vehicle (which is remotely controlled) operates. The 3D operational area comprises all regions where the autonomous vehicle may travel or navigate and is monitored by the plurality of LiDAR sensors and the at least one camera. Notably, the 3D operational area encompasses a static object (for example, such as a restricted area, a port, a warehouse, a construction site, a logistic yard, a depot, a factory, a pathway, a barrier, a traffic cone, a parked vehicle and similar), a dynamic object (for example, such as a pedestrian, a moving object, other vehicle, and similar), and the like. The 3D operational area is defined by physical boundaries and is equipped with the necessary infrastructure to support for driving of the autonomous vehicle. The 3D operational area may be restricted to an authorized person and the autonomous vehicle only, to ensure a controlled environment free from unexpected interference. Moreover, the 3D operational area may have predefined routes or paths along which the autonomous vehicle is expected to travel. Additionally, the 3D operational area may include environmental control units, such as a lighting unit, a weather monitoring unit, and the like, to ensure optimal operating conditions. In this regard, the plurality of LiDAR sensors and the at least one camera are arranged in a manner that an entirety of the 3D operational area is covered, thereby ensuring a continuous detection and/or tracking of the objects (i.e., both the static object and the dynamic object) present in the 3D operational area.

In this regard, the plurality of LiDAR sensors are installed in an infrastructure within the 3D operational area for example such as walls, ceilings, boundaries, and similar. Optionally, one or more scaffolding structures are used for mounting the plurality of LiDAR sensors at sufficient height in outdoor, when there is no suitable equipment or place within the operational area for deploying. Optionally, layout (such as height, placement, and overall number) of the plurality of LiDAR sensors is dependent on multiple factors such as area size, controlled vehicle size, other moving object size, minimum detectable object size requirement, redundancy requirements, or similar. It will be appreciated that the arrangement of the plurality of LiDAR sensors to cover an entirety of the 3D operational area ensures uninterrupted real-time detection and tracking of the objects. This facilitates an accurate situational awareness and enhances safety of remote driving operations of the autonomous vehicle. It will also be appreciated that defining physical boundaries and restricting access to the autonomous vehicle creates a controlled environment. This minimizes the likelihood of unexpected interference and ensures safe and reliable operation. The term *"autonomous vehicle"* refers to a self-driving or self-operating machine designed to navigate and perform tasks without requiring a human intervention. Herein, the autonomous vehicle can operate in various environments, (such as industrial settings, logistics facilities, public roads, and similar) and use technologies such as LIDAR, cameras, GNSS/GPS, and machine learning to ensure safe and precise operation.

Optionally, the 3D depth map of the 3D operational area is in form of one of: a 3D voxel grid, a two-dimensional (2D) depth image, a fused 3D point cloud whose points include at least depth and colour information, a 3D mesh, an octree, a hash table. In this regard, the term *"three-dimensional voxel grid"* refers to a volumetric data representation of the 3D operational area, where a space is divided into a regular grid of cubic units called voxels. Each voxel corresponds to a specific volume in the 3D operational area and stores depth information or other attributes, such as color, intensity, or similar, as captured by the plurality of LiDAR sensors and the at least one camera. Herein, the 3D voxel grid provides a structured way to represent spatial occupancy and object boundaries, enabling an efficient analysis of the physical environment for navigation and obstacle detection. It will be appreciated that the 3D voxel grid enables precise volumetric representation of the 3D operational area, allowing the system to easily divide the 3D operational area into discrete units for detailed analysis, object segmentation, and efficient path planning.

Moreover, the term *"two-dimensional depth image"* refers to a digital representation of the 3D operational area, where each pixel in a two-dimensional (2D) image corresponds to a specific point in an environment and encodes depth information relative to the plurality of LiDAR sensors and the at least one camera. This format simplifies representation of 3D space into a compact, grid-based structure, facilitating faster data processing and transmission. Herein, the 2D depth image is particularly advantageous for real-time applications that require an efficient mapping of the 3D operational area, such as obstacle avoidance, restricted-environment monitoring, or similar. It will be appreciated that the 2D depth image provides a computationally efficient representation of depth information, enabling faster processing and real-time updates, which are critical for responsive navigation of the autonomous vehicle.

Moreover, the term *"fused 3D point cloud"* refers to a collection of discrete points in a 3D space, where each point represents a specific location in the 3D operational area and includes the at least depth and color information. The fused 3D point cloud is generated by integrating data from the plurality of LiDAR sensors and the at least one camera using data fusion algorithms. Herein, the fused 3D point cloud provides a highly detailed and an accurate representation of the 3D operational area, capturing spatial and visual information that is essential for precise navigation, object recognition, and situational awareness. It will be appreciated that the fused 3D point cloud integrates depth and color information, enhancing the system's ability to detect and identify the objects with high accuracy by combining spatial and visual features.

Moreover, the term *"three-dimensional mesh"* refers to a geometric representation of the 3D operational area composed of interconnected vertices, edges, and faces that define a surface geometry of the objects. The 3D mesh is derived from the fused 3D point cloud using meshing algorithms to create a continuous surface representation. Herein, the 3D mesh is used to visualize and analyse the 3D operational area, enabling the autonomous vehicle to recognize object shapes, dimensions, and spatial relationships for effective navigation and obstacle avoidance. It will be appreciated that the 3D mesh offers a structured representation of the 3D operational area, facilitating surface analysis and more accurate modelling of the objects for obstacle avoidance and collision prevention.

Moreover, the term *"octree"* refers to a hierarchical data structure used to represent the 3D operational area by recursively subdividing a space into eight cubic regions. Each level of the octree provides a finer granularity of spatial representation, enabling efficient storage, retrieval, and processing of depth data. Herein, the octree optimizes management of large-scale 3D data by reducing memory usage while maintaining an accurate and detailed spatial information of the 3D operation area. Such an approach enhances ability of the system to process real-time data for navigation and environmental monitoring. It will be appreciated that the octree efficiently organizes spatial data, allowing the system to process and retrieve information quickly, particularly for large-scale 3D operational areas, thereby reducing computational load.

Moreover, the term *"hash table"* refers to a data structure that stores spatial data as key-value pairs, where the keys are computed using a hashing function. Herein, the hash table is used to efficiently index and retrieve depth information and other attributes of points in the 3D operational area. This structure allows rapid access to spatial data, supporting real-time decision-making processes such as obstacle detection, object tracking, path planning, and similar. By leveraging the hash table, the system ensures high computational efficiency, even in complex and dynamic environments. It will be appreciated that the hash table provides rapid access to stored data, enabling the system to efficiently retrieve and update object-specific information, which improves real-time decision-making in dynamic environments. The aforesaid types of data structures are well-known in the art.

A technical effect of the aforementioned feature is that the system provides flexible and efficient representation of the 3D operational area by enabling the use of various data structures, thereby enhancing adaptability, accuracy, and computational efficiency for real-time navigation and obstacle detection in diverse environments.

Throughout the present disclosure, the plurality of LiDAR sensors is/are arranged within the 3D operational area such that an entirety of the 3D operational area is covered by sensing zones of one or more LiDAR sensors. In this regard, the plurality of LiDAR sensors detects spatial information from the 3D operational area. In particular, the LiDAR sensors are installed in the infrastructure such that the full route or driving path of the autonomous vehicle within the 3D operational area is continuously covered by the sensing zones, ensuring uninterrupted detection throughout vehicle operation. Notably, the term *"spatial information"* refers to an information about a location and a shape of the autonomous vehicle as well as the objects in a physical space. In this regard, the plurality of LiDAR sensors generate one or more 3D models of the 3D operational area by capturing the spatial information of the autonomous vehicle, and the objects with high resolution. This capability not only allows the system to map the static object but also allows to detect, classify, and track the dynamic object. The plurality of LiDAR sensors emit laser pulses, which are reflected by the objects in the 3D operational area. The time taken for reflected pulses to return to said sensors is measured, allowing the system to calculate a distance to each object. This process generates a point cloud, representing the spatial arrangement of the objects within the 3D operational area. In this regard, the plurality of LiDAR sensors enables the system to perceive the 3D operational area in real-time by managing multiple LiDAR sensors and process a generated point cloud data, which is being captured by the LiDAR sensor. This data is then transformed, filtered, and cleared from background noise. The remaining points are grouped into clusters representing individual objects. In this regard, each object is tracked using a generic Kalman filter state estimator, which predicts and updates position and motion of the objects over time. Notably, at least two LiDAR sensors detect all the objects in the 3D operational area. The principle of operation of LiDAR sensors are well-known in the art. It will be appreciated that high-resolution 3D models generated by the plurality of LiDAR sensors significantly enhance situational awareness of the system, enabling the autonomous vehicle to make informed decisions in real-time. Additionally, the data captured by the plurality of LiDAR sensors can be integrated with the system to update it dynamically, ensuring that the 3D operational area is represented accurately even under changing conditions. It will also be appreciated that the use of the plurality of LiDAR sensors allow for adaptive navigation and obstacle avoidance. The system can utilize the spatial information to calculate safe and efficient routes, identify potential hazards, and take corrective actions such as altering a path, a speed of the autonomous vehicle, and the like. This ensures that the autonomous vehicle operates safely and efficiently even in complex and dynamic environments. A technical effect of utilizing the plurality of LiDAR sensors is that it captures high-resolution spatial information, facilitating an accurate detection, classification, and tracking of the objects in real-time.

Throughout the present disclosure, the term *"camera"* refers to an optical device equipped with a light-sensitive sensor, such as a charge-coupled device (CCD) or complementary metal-oxide-semiconductor (CMOS) sensor, which captures visual information of the 3D operational area in the form of images or video. Herein, the at least one camera is arranged within the 3D operational area such that an entirety of the 3D operational area is covered by a field of view (FOV) of the at least one camera. The at least one camera capture visual information, including color, texture, finer object shapes, and similar, which may not be detected by the plurality of LiDAR sensors, especially for small or low-reflective objects. These visual details provide additional context and complement the depth data from the plurality of LiDAR sensors, enabling more accurate object detection and classification within the 3D operational area. A technical effect of utilizing the at least one camera alongside the plurality of LiDAR sensors significantly improves object detection and environmental perception of the system, allowing the autonomous vehicle to detect and track both visually complex and small objects in the 3D operational area. This enhanced perception facilitates a safer and more reliable navigation.

Optionally, the at least one camera is implemented as a plurality of cameras, and wherein at least one camera amongst the plurality of cameras are co-located with at least one LiDAR sensor amongst the plurality of LiDAR sensors, within the 3D operational area. In this regard, the term *"co-located"* refers to an arrangement where two or more devices, such as the at least one camera and the at least one LiDAR sensor, are positioned in close proximity within the 3D operational area. In an implementation, the plurality of cameras are positioned in proximity to the at least one LiDAR sensor amongst the plurality of LiDAR sensors, within the 3D operational area. Herein, co-location ensures that both the plurality of cameras and the at least one LiDAR sensor have overlapping fields of view. The at least one camera amongst the plurality of cameras captures visual data (such as color, texture, and similar) while the at least one LiDAR sensor being co-located simultaneously captures depth data for same objects and regions. Since the visual data and depth data originate from same location, the data fusion algorithm of the system can seamlessly map the color, texture, and shape data from the plurality of cameras onto the corresponding depth points in the LiDAR-generated point cloud. This alignment minimizes discrepancies caused by differences in perspective or field of view. The co-located setup ensures that smaller or low-reflective objects, which may be missed by the at least one LiDAR sensor due to its inherent limitations, are detected using the complementary visual data from the plurality of cameras. It will be appreciated that the co-located configuration improves an accuracy of detection of the objects within the 3D operational area. It will also be appreciated that the co-located configuration supports real-time data fusion and processing, making the system more effective in dynamic environments where timely and precise object detection is critical. A technical effect of this implementation is that the plurality of cameras and the plurality of LiDAR sensors capture their respective sensor data from a similar pose and perspective, which makes it easy to integrate the LiDAR data and the plurality of images.

Throughout the present disclosure, the term *"processor"* refers to a computational element that is operable to execute the software framework. Examples of the processor may include, but are not limited to, a microprocessor, a microcontroller, a complex instruction set computing (CISC) microprocessor, a reduced instruction set computing (RISC) microprocessor, a very long instruction word (VLIW) microprocessor, or any other type of processing circuit. Herein, the at least one processor is communicably coupled to the at least one LiDAR sensor, the at least one camera, and optionally, to a vehicle control system.

Throughout the present disclosure, the term *"three-dimensional point cloud"* refers to a collection of data points in the 3D operational area, where each point is defined by spatial coordinates (i.e., x, y, z). These coordinates represent a position of an object or a surface in the 3D operational area relative to a reference point, such as a location of the at least one LiDAR sensor. Herein, the plurality of LiDAR sensors emit laser pulses that reflect off objects in the 3D operational area. A time-of-flight of these reflections is used to calculate distances, resulting in the 3D point cloud for each LiDAR sensor. In this regard, the 3D point clouds generated are transmitted to the at least one processor in real-time via communication interfaces. The at least one processor is configured to continuously receive the LiDAR data without delays, ensuring up-to-date information about the 3D operational area is always available. Notably, each 3D point cloud contains depth information and coordinates of detected objects, which are then structured and processed by the at least one processor for further analysis and integration with other data sources, such as a data captured by the at least one camera. A technical effect of receiving the LiDAR data is that it enables the at least one processor to continuously generate an accurate and detailed 3D representation of the 3D operational area in real-time. This facilitates precise situational awareness, improves navigation safety, and ensures timely detection and tracking of the objects, thereby enhancing operational reliability of the autonomous vehicle.

Throughout the present disclosure, the at least one camera captures the plurality of images of the 3D operational area, which are transmitted to the at least one processor in real-time. The plurality of images include high-resolution details for example, such as a color, a shape, a texture, and similar, of the objects within the 3D operational area. The at least one processor is configured to process this visual data to identify the objects, recognize patterns, and correlate visual details with corresponding LiDAR data. By mapping the visual data to the 3D point cloud generated by the at least one LiDAR sensor, the at least one processor is configured to create an enhanced representation of the 3D operational area, which is used for an accurate object detection, classification, and navigation. A technical effect of such an approach is that it enables the at least one processor to generate a visually rich and highly detailed representation of the 3D operational area by integrating real-time visual data with the LiDAR data. This enhances ability of the system to detect and identify the objects, even those that are small, low-reflective, visually unique, or similar, thereby improving overall reliability and safety of operations of the autonomous vehicle.

Optionally, the at least one processor is further configured to generate at least one additional 3D point cloud from the plurality of images, using an artificial intelligence (AI)-based technique, and wherein the at least one additional 3D point cloud is also integrated with the LiDAR data and the plurality of images for generating the 3D depth map of the 3D operational area. In this regard, the term *"artificial intelligence-based technique"* refers to a computational approach that utilizes machine learning, deep learning, and similar, to infer depth information from the plurality of images. Herein, the at least one processor is configured to employ the AI-based technique to analyze visual features, such as texture, shading, and perspective cues, in the plurality of images to generate the 3D depth map representing the 3D structure of the environment. Moreover, the term *"additional three-dimensional point cloud point cloud"* refers to a supplementary 3D representation of the 3D operational area that is generated using the AI-based technique, to complement the plurality of 3D point clouds obtained from the LiDAR data. Optionally, the at least one processor processes the plurality of images captured by the at least one camera using the AI-based technique, such as Dense Prediction Transformer (DPT), which may analyse pixel features, texture, shading, and other visual cues to predict depth values (i.e., a distance between objects in captured images and the at least one camera). For example, in an industrial port scenario, a thin wire, or a low-reflectivity object may not be effectively detected by LiDAR alone. The AI-based depth estimation technique generates an additional 3D point cloud by analysing image gradients and contrast, allowing for enhanced detection of such objects. This supplementary depth information is then fused with the LiDAR-generated point cloud to create a highly detailed 3D depth map of the 3D operational area. The depth values define spatial position of the objects within the 3D operational area relative to the at least one camera. These depth values are used to construct the at least one additional 3D point cloud, which represents a geometric structure and spatial distribution of the objects within the 3D operational area. In this regard, the generated at least one additional 3D point cloud is combined or used in conjunction with the LiDAR data to enhance depth resolution, improve object localization, and increase detection accuracy for the objects that may not be effectively captured by the plurality LiDAR sensors alone (as in prior art case). It will be appreciated that the AI-based technique enhances the spatial awareness of the system, leading to more accurate object recognition and environment mapping. It will also be appreciated that integrating the AI-based technique enables a cost-effective solution by reducing reliance on expensive LiDAR sensors without compromising safety or accuracy.

In an example, the system may be implemented within an industrial port where an autonomous vehicle may operate within the 3D operational area to transport shipping containers between docking stations and storage zones. As the autonomous vehicle navigates within the 3D operational area, the plurality of LiDAR sensors may continuously emit laser pulses and capture reflected signals to generate the plurality of 3D point clouds representing surrounding environment. Simultaneously, the at least one camera may capture the plurality of images, such as obstacles, pedestrians, and cargo. In this regard, to enhance depth perception and improve detection of objects with low reflectivity or small geometric profiles, the at least one processor processes the plurality of images being captured by the at least one camera using the AI-based technique, to generate the at least one additional 3D point cloud from the camera-derived depth data. This AI-generated point cloud provides essential depth information for objects that conventional LiDAR sensors may struggle to detect, thin structures (such as wires, poles, and similar), low-reflectivity surfaces (such as black-coloured objects), and partially occluded elements. Using the real-time 3D depth map, the at least one processor continuously detects obstacles and moving objects, including other autonomous vehicles, dock workers, industrial equipment such as forklifts, small debris or unexpected obstacles on a ground. If an obstacle may be detected within the autonomous vehicle's projected path, the at least one processor may send a signal to the vehicle control system, which dynamically adjusts the vehicle's trajectory by modifying its navigation path to avoid said obstacle, dynamically adjusting a speed based on proximity to the obstacle, stopping said vehicle if necessary to prevent a collision, and similar. As the vehicle moves, the plurality of LiDAR sensors and the at least one camera continuously capture real-time data, enabling the processor to update the 3D depth map dynamically. This ensures that the system can adapt to environmental changes, such as sudden appearance of new obstacles, track moving objects in real time for improved situational awareness, and optimize navigation routes based on real-time conditions. For instance, if a dock worker carrying equipment suddenly steps into the vehicle's path, the system immediately detects movement and instructs the vehicle control system to decelerate or stop within milliseconds.

A technical effect of implementing the at least one camera with the AI-based technique is that it enhances depth resolution by generating the at least one additional 3D point cloud, improving detection of small, thin, or low-reflectivity objects that may not be effectively captured by the plurality of LiDAR sensors alone. Such an approach enhances object localization, increases obstacle detection accuracy, and improves navigation reliability in complex environments.

Optionally, the AI-based technique is one of: a Dense Prediction Transformer (DPT)-based monocular depth estimation algorithm, a diffusion-based point cloud generative algorithm, a flow-based generative model, a Generative Adversarial Network (GAN)-based model, a Proximity Attention Point Rendering (PAPR) algorithm, a stereo vision-based algorithm. In this regard, the term *"Dense Prediction Transformer-based monocular depth estimation algorithm"* refers to a deep learning model that utilizes transformer-based architectures to predict depth information from a single image. Unlike conventional convolutional neural networks (CNNs), the Dense Prediction Transformer (DPT)-based monocular depth estimation algorithm leverages self-attention mechanisms to capture long-range dependencies within the plurality of images, allowing for improved depth estimation across complex scenes. The model processes spatial relationships and contextual information to generate a dense 3D depth map representing a three-dimensional structure of a given scene. Moreover, the term *"diffusion-based point cloud generative algorithm"* refers to a probabilistic deep learning model that generates or refines the at least one 3D point cloud by iteratively modeling data distribution as a denoising process. The diffusion-based point cloud generative algorithm starts with a noise distribution and gradually refines the points through a sequence of learned transformations, ensuring realistic and high-resolution 3D reconstructions. Such an approach is particularly useful for enhancing incomplete or sparse 3D point clouds obtained from the at least one camera. Moreover, the term *"flow-based generative model"* refers to a deep learning framework used for depth estimation and 3D data generation by applying invertible transformations to map complex data distributions to simpler latent spaces. The flow-based generative model, often based on normalizing flows, explicitly learn the probability density function of data, enabling accurate and efficient sampling for generating new depth maps or the 3D point clouds. The flow-based generative model ensures consistent and realistic depth estimations by leveraging learned spatial relationships. Moreover, the term *"Generative Adversarial Network-based model"* refers to a deep learning architecture comprising two neural networks (namely, a generator and a discriminator) that compete to improve depth estimation or 3D reconstruction. The generator creates synthetic depth maps or 3D point clouds, while the discriminator evaluates their realism against real data. Through iterative adversarial training, the Generative Adversarial Network (GAN)-based model enhances the accuracy, resolution, and realism of generated depth information, making it particularly effective for reconstructing occluded or low-texture regions. Moreover, the term *"Proximity Attention Point Rendering algorithm"* refers to an AI-based depth estimation and rendering technique that prioritizes spatially relevant points in a scene by assigning weighted attention values. The Proximity Attention Point Rendering (PAPR) algorithm enhances depth prediction by focusing computational resources on critical regions where fine details or depth variations are significant. Such an approach improves depth accuracy and spatial resolution, particularly in occluded environments where traditional point cloud processing may struggle. Moreover, the term *"stereo vision-based algorithm"* refers to a depth estimation technique that reconstructs 3D spatial information by analyzing disparities between two or more images captured from slightly different viewpoints by the at least one camera. The stereo vision-based algorithm identifies corresponding pixels in the plurality of images and computes depth based on disparity between their positions, using triangulation principles. Such an approach is widely used in robotics, autonomous navigation, and 3D scene reconstruction to obtain high-precision depth information from inputs provide by the at least one camera. The aforesaid AI-based techniques are well-know in the art.

A technical effect of using the AI-based techniques from any one of the aforesaid types is that it enhances accuracy and robustness of depth estimation, improves object detection in complex environments, and enables fusion of the LiDAR data and the plurality of images for reliable 3D perception of the 3D operational area.

Optionally, the at least one processor is further configured to perform at least one of:
identify a plurality of objects using the 3D depth map;
categorize the plurality of objects into one or more categories; using the AI-based technique.

Optionally, the present disclosure uses an AI-based technique that may employ a You Only Look Once (YOLO)-based deep learning model as an example of an AI-based object detection model for real-time object detection and classification within the 3D operational area. In one embodiment, the YOLO model processes the plurality of images captured by the at least one camera to extract visual features of objects and associate them with corresponding LiDAR-generated point cloud data. This fusion of spatial and visual data improves the accuracy of depth estimation, object localization, and classification. The YOLO-based model is particularly optimized for detecting small objects, transparent objects, and low-reflectivity materials, such as thin poles, small debris, or wires, by leveraging high-resolution image features in conjunction with LiDAR data. Moreover, the system may utilize YOLO-based deep learning to track and predict object movement by analyzing consecutive depth maps and estimating motion trajectories. This enables accurate real-time identification of dynamic objects within the 3D operational area, including vehicles, pedestrians, and obstacles. Furthermore, the detected object classifications and movement predictions are transmitted to the vehicle control system, allowing it to dynamically adjust the navigation path of the autonomous vehicle and prevent potential collisions. The YOLO model is continuously trained and fine-tuned to enhance detection robustness, ensuring reliable operation even in challenging environmental conditions such as low-light scenarios or high-reflectivity surfaces.

In this regard, the at least one processor applies the AI-based technique to detect and distinguish individual the plurality of objects within the 3D depth map by analyzing spatial, geometric, and structural characteristics. The at least one processor may extract depth-based features such as object contours, surfaces, point distributions, and similar. In this regard, from any one of the aforesaid AI-based technique such as DPT, GAN-based models, or PAPR process these features to detect the plurality of objects. The AI-based technique segments point cloud regions or depth pixels that correspond to distinct objects using deep learning-based segmentation methods. The at least one processor then matches detected objects with a trained database to identify their label (e.g., vehicle, pedestrian, obstacle, and similar). Herein, 3D bounding boxes may be generated to define object position, dimensions, and orientation within the 3D operational area. Optionally, the at least one processor is configured to categorize the plurality of objects into one or more categories using the AI-based technique by processing the 3D depth map, which is generated from the LiDAR data, the plurality of images, and AI-driven depth estimation methods. The at least one processor may apply deep learning models, such as convolutional neural networks (CNNs), vision transformers, or flow-based generative models, to extract spatial, geometric, and contextual features from the 3D depth map and classify detected objects based on predefined categories. Multi-sensor data fusion is employed to integrate the LiDAR data, RGB images, and depth information, enhancing object classification accuracy. Additionally, the AI-based technique refines object categorization by analyzing object motion, size, and contextual relationships, distinguishing between the static object, the dynamic object, and hazardous obstacles. Such categorization enables improved scene perception, real-time obstacle detection, and autonomous decision-making in applications such as robotics, autonomous vehicles, and similar. A technical effect of identifying and categorizing the plurality of objects using the AI-based technique improves spatial awareness, enabling precise detection and classification of obstacles, equipment, and similar. This enhances autonomous decision-making, navigation efficiency, and operational safety in dynamic environments.

Throughout the present disclosure, the term *"data fusion algorithm"* refers to a computational process that integrates data from multiple sources to produce a unified, more accurate, and comprehensive representation of the 3D operational area. The term *"real-time"* refers to ability of the system to receive the LiDAR data, the plurality of images, generate depth information, and update the 3D depth map within a time frame that supports immediate decision-making for autonomous navigation. The processing latency may be minimized to ensure responsiveness suitable for dynamic environments, for example, within 5 seconds to 10 seconds, depending on computational capabilities and communication protocols. For example, utilizing high-speed data transmission technologies such as 5G, and the like, enables low-latency communication between the plurality of LiDAR sensors, the at least one camera, and the at least one processor, facilitating rapid updates to the 3D depth map for timely obstacle detection and navigation adjustments. Herein, the at least one processor is configured to employ the at least one data fusion algorithm, which works by aligning and synchronizing data from the at least one LiDAR sensor and the at least one camera. Upon receiving the LiDAR data and the plurality of images captured by the at least one camera, the at least one data fusion algorithm maps the visual details to the corresponding 3D points in the 3D point cloud, aligning them spatially. This integrated data results in a more complete and precise 3D depth map of the 3D operational area. The process occurs in real-time, enabling the at least one processor to continuously update the 3D depth map as the autonomous vehicle moves. Optionally, in an implementation, the at least one processor employs the at least one data fusion algorithm to the generated at least one additional 3D point cloud and the LiDAR data in order to generate the 3D depth map (i.e., a high-resolution 3D map) of the 3D operational area. A technical effect of employing the at least one fusion algorithm is that it enables creation of a more accurate and detailed 3D depth map, improving ability of the system to detect, classify, and track the objects. This enhanced 3D depth map also facilitates in navigation and decision-making, ensuring a higher level of situational awareness and safety for the autonomous vehicle operating within the 3D operational area. Thus, the real-time processing ensures that the system remains responsive to changes in the 3D operational area, facilitating dynamic operation in complex and evolving situations.

Optionally, the at least one data fusion algorithm comprises at least one of: a Kalman filter, a Bayesian network-based inference algorithm, a deep learning-based algorithm, a histogram-based algorithm. In this regard, the Kalman filter can be employed to fuse the LiDAR data and the plurality of images captured by the at least one camera by predicting state of objects (e.g., a position, a velocity, and similar) and updating these predictions based on incoming sensor measurements. This approach helps to improve the accuracy and smoothness of the generated 3D depth map by compensating for sensor noise and inaccuracies. In the system, such an algorithm can be employed to combine and infer the relationships between the LiDAR data and the plurality of images. Moreover, the Bayesian network-based inference algorithm can be employed to combine and infer the relationships between the LiDAR data and the plurality of images captured by the at least one camera. By using said algorithm, it allows for the integration of uncertain or incomplete data and can effectively generate a more accurate and comprehensive understanding of the 3D operational area, thereby enhancing object detection and classification. Moreover, the deep learning algorithm can be used for an advanced data fusion by leveraging large-scale labelled data to automatically learn the mapping between the LiDAR point clouds and the plurality of images captured by the at least one camera. This allows the at least one processor to classify and track objects within the 3D operational area with high accuracy, enhancing the system's object recognition and environmental understanding capabilities. Moreover, the histogram-based algorithm could be employed to fuse the LiDAR data and the plurality of images captured by the at least one camera by analysing the distribution of depth and visual features across the 3D operational area. By comparing and aligning these distributions, said algorithm can identify patterns, improve the accuracy of object classification, and refine the generation of the 3D depth map of the 3D operational area. The aforesaid types of the at least one data fusion algorithm are well-known in the art. A technical effect of the aforementioned feature is that the integration of these data fusion algorithms enables more accurate, robust, and efficient processing of sensor data (i.e., the LiDAR data and the plurality of images captured by the at least one camera) in real-time. By combining data from the plurality of LiDAR sensors and the at least one camera, the system can better handle noisy, uncertain, incomplete data, or similar, thereby improving overall accuracy and precision of the 3D depth map of the 3D operational area.

Optionally, the at least one processor is configured to continuously update the 3D depth map, in real time, during a time period of movement of the autonomous vehicle within the 3D operational area. In this regard, the at least one processor receives the LiDAR data and the plurality of images captured by the at least one camera during the time period of movement of the autonomous vehicle. The at least one processor employs the at least one data fusion algorithm (as described earlier) to combine and integrate said data. In this regard, the at least one processor continuously processes the sensor data and updates the 3D depth map without delay, synchronizing the visual and depth information in real-time. As the autonomous vehicle moves, the at least one processor keeps updating the 3D depth map in real-time by using latest sensor data. The updated 3D depth map is immediately used for tasks like object detection, navigation planning, collision avoidance, and similar. It will be appreciated that the real-time processing and continuous update of the 3D depth map ensure that the autonomous vehicle has the most accurate and up-to-date representation of the 3D operational area, significantly improving the autonomous vehicle's spatial awareness and obstacle detection capabilities in dynamic operational conditions. A technical effect of the aforementioned feature is that it ensures real-time situational awareness for the autonomous vehicle by providing an up-to-date 3D representation of the 3D operational area. This continuous update allows the autonomous vehicle to make immediate adjustments to its actions (such as steering, braking, accelerating, or similar) based on most current data. The dynamic and responsive nature of the system improves ability of the autonomous vehicle to navigate complex and changing environments, which is essential for maintaining safety and optimal performance in real-time scenarios.

Optionally, the at least one processor is further configured to identify a plurality of objects using the 3D depth map by employing at least one object detection technique, the plurality of objects comprising the autonomous vehicle and at least one other object in the 3D operational area. In this regard, the object detection is performed using the integrated LiDAR data and the plurality of images. The at least one processor employs the at least one object detection techniques to identify and localize the plurality of objects in the 3D depth map. Examples of the at least one object technique may include, but are not limited to, point cloud segmentation technique (i.e., such a technique may segment the 3D point cloud into distinct clusters corresponding to individual objects), object classification technique (i.e., such a technique may classify objects based on their geometric, spatial, or visual features extracted from the depth map and images), machine learning technique (i.e., such a technique may include algorithms such as Convolutional Neural Networks or other deep learning models trained to detect and classify objects in the 3D operational area), shape and size detection techniques (i.e., such techniques may detect objects based on predefined geometric parameters like size, contour, aspect ratio, or similar), and motion tracking technique (i.e., such a technique may estimate and track movement of dynamic objects within the 3D operational area). Herein, the at least one object detection technique employed would depend on the form of the 3D depth map. For example, in case of the 3D depth map being in the form of the 3D voxel grid, the fused 3D point cloud, the octree, or the hash table, the object detection technique could be at least one point clustering technique that generates one or more clusters of dynamic points. The at least one processor continuously updates the 3D depth map as the latest sensor data is received. As the autonomous vehicle moves, the at least one processor is configured to employ the at least one object detection technique in real-time to ensure that the 3D depth map is constantly updated, maintaining up-to-date information on surrounding objects. In this regard, the at least one processor integrates results of the detection and classification algorithms to generate a comprehensive understanding of the 3D operational area. Thereby, the at least one processor can track movement of dynamic objects, recognize static objects, the autonomous vehicle's own position and the at least one other object in the 3D operational area in real-time. It will be appreciated that the continuous real-time updates of the 3D depth map allow the system to maintain accurate and current spatial information, ensuring precise object detection and classification throughout an operation the autonomous vehicle. This capability enables the system to dynamically adapt to changes in the 3D operational area, such as an appearance of new objects, alterations in trajectories of dynamic objects, or similar. A technical effect of the aforementioned feature is that the system enables to identify and localize the plurality of objects, including the autonomous vehicle itself, thereby facilitates reliable navigation planning, collision avoidance, motion control, an efficient handling of goods (like industrial equipment's, raw materials, and the like), and similar. This ensures that the autonomous vehicle operates safely and efficiently in dynamic and complex environments (like crowded pedestrian areas, and similar).

Optionally, the at least one other object comprises at least one of: an object whose bounding box has at least one dimension less than a first threshold, an object whose bounding box volume is less than a second threshold, an object whose thickness is less than a third threshold, an object which is at least partially made of a low-reflectivity material.

In this regard, the term *"bounding box"* refers to a geometric representation of an object, used 3D modelling to define spatial limits of said object. The bounding box is the smallest rectangular prism (in 3D space) or rectangle (in 2D space) that fully encloses the object, aligning with the coordinate axes. The bounding box is defined by its corner points or its center coordinates, along with its dimensions, such as length, width, and height in 3D or width and height in 2D. Moreover, the term *"bounding box volume"* is a scalar value representing a 3D space occupied by the bounding box of an object. The bounding box volume is calculated as a product of length, width, and height of the bounding box (i.e., bounding box volume= length × width × height). Moreover, the term *"low-reflectivity material"* refers to a material that exhibits minimal reflection of incident electromagnetic radiation, such as visible light or infrared waves. The reflectivity of a material is quantified by its reflection coefficient, which represents a fraction of an incident energy reflected by its surface. The low-reflectivity material has a reflection coefficient below a specified threshold, resulting in significant absorption or scattering of the incident radiation. Examples of the low-reflectivity material may include but are not limited to, matte surfaces, materials with dark pigments (like black rubber or asphalt), and surfaces treated to reduce reflection (like as anti-reflective coatings, or similar).

Herein, small, thin, low-reflectivity objects are detected using integration of the LiDAR data with camera images. Optionally, the at least one processor analyses the bounding box dimensions of detected objects within the 3D depth map of the 3D operational area. The at least one processor checks whether the at least one dimension of the bounding box (e.g., length, width, or height) is smaller than the first threshold. If said condition is met, the at least one processor classifies said objects as the at least one other object based on this criterion. The first threshold may, for example, lie in a range from 5 cm to 20 cm. It will be appreciated that detecting objects with bounding box dimensions smaller than the first threshold ensures that the system identifies narrow or short objects that might otherwise be overlooked, such as poles, small debris, or narrow obstacles, thereby improving the safety and reliability of navigation in complex environments.

Optionally, the at least one processor calculates the volume of the bounding box for each detected objects by a formula (i.e., bounding box volume= length × width × height). The at least one processor then compares this calculated volume to the second threshold. In this regard, objects with bounding box volume smaller than the second threshold are flagged and categorized as the at least one other object. This approach is particularly useful for identifying small objects, such as debris, tools, or compact obstacles in the 3D operational area. The second threshold may, for example, lie in a range from 125 cm³ to 8000 cm³. It will be appreciated that calculating and comparing the bounding box volume to the second threshold allows for the identification of compact objects, such as tools or small packages, which may be critical to avoid during the operation of the autonomous vehicle.

Optionally, thickness is determined as smallest spatial extent of the object along any axis (e.g., a shortest dimension of its bounding box). The at least one processor evaluates the thickness of each object by analysing its bounding box dimensions and identifying the smallest value. If the thickness of said objects is below the third threshold, said object is identified as the at least one other object. The third threshold may, for example, lie in a range from 1 mm to 10 cm. It will be appreciated that evaluating the thickness of objects against the third threshold ensures the detection of thin objects like wires or barriers, which are challenging to detect but crucial for preventing collisions in the 3D operational area.

Optionally, the at least one processor evaluates the reflectivity of detected objects using an intensity or return signal strength from the at least one LiDAR sensor or other optical data. Objects that reflect minimal light or exhibit low signal intensity are identified as being partially composed of low-reflectivity materials. In this regard, the at least one processor classifies such objects, including matte-finished surfaces, dark-coloured objects, or materials with anti-reflective properties, as the at least one other object. It will be appreciated that the ability to classify objects made of low-reflectivity materials ensures robust detection of dark-colored or matte-finished surfaces, thereby enhancing performance of the system in scenarios with low visibility or challenging lighting conditions. Moreover, the one or more objects also comprise other objects which are detectable by either of: the LiDAR data, the plurality of images, when considered on their own for object detection.

A technical effect of the aforementioned feature is that the system enables precise detection and classification of the at least one other object within the 3D operational area. Such an approach enhances ability of the system to identify challenging objects, improving the safety and reliability of navigation of the autonomous vehicle in complex environments.

Optionally, the at least one processor is further configured to:
determine a state of the plurality of objects, corresponding to a first time, wherein the state of each object comprises position coordinates, heading direction, a speed, and a yaw rate, of said object;
generate a next 3D depth map using next LiDAR data and a next plurality of images, corresponding to a second time that is later than the first time; and
update the state of the plurality of objects, by comparing the 3D depth map with the next 3D depth map.

In this regard, the term *"position coordinates"* refer to a set of numerical values that define a location of an object in the 3D operational area. The position coordinates are represented in a cartesian coordinate system as (x, y, z), wherein x represents a horizontal position along x-axis, y represents a horizontal position along y-axis, and z represents a vertical position along z-axis. Moreover, the term *"heading direction"* refers to an orientation of an object in a horizontal plane, indicating a direction in which said object is facing or moving. Typically, a value of the heading direction is often expressed in degrees or radians with respect to a predefined frame of reference, such as true north or the x-axis. Moreover, the term *"speed"* refers to a scalar quantity that represents a rate of change of position of an object over time. The speed is calculated as a distance travelled by the object per unit of time and is expressed in meters per second (m/s) or kilometers per hour (km/h). Moreover, the term *"yaw rate"* refers to a rate at which an object rotates around its vertical axis (i.e., z-axis). The yaw rate quantifies an angular velocity of the object's heading direction and is measured in degrees per second (°/s) or radians per second (rad/s).

Herein, the at least one processor is configured to process the 3D depth map generated using the LiDAR data and the plurality of images captured at the first time. Using the at least one object detection technique, the at least one processor identifies the plurality of objects and determines their state, wherein the state of each object comprises the position coordinates, the heading direction, the speed, and the yaw rate. The at least one processor collects the next LiDAR data and the next plurality of images, corresponding to the second time. In this regard, the at least one processor integrates this data to produce the next 3D depth map, ensuring the spatial resolution and accuracy of detected objects. By comparing the two 3D depth maps, the at least one processor identifies changes in the location, motion, or orientation of said objects. The at least one processor may use algorithms such as motion tracking, object matching, trajectory estimation, and similar, to update state variables (i.e., the position coordinates, the heading direction, the speed, and the yaw rate) for each object based on the differences observed between the two 3D depth maps. It will be appreciated that determining and updating the state of the plurality of objects, including the position coordinates, the heading direction, the speed, and the yaw rate, allows for precise real-time tracking of the plurality of objects within the 3D operational area.

In an example, at a first time T1, the at least one processor may generate a 3D depth map using the LiDAR data and the plurality of images. Herein, the at least one processor may identify an object (such as a vehicle) with the following state parameters, such as position coordinates may be (10.5 metres (m), 5.3 m, 0.0 m) indicating a location of the vehicle in the 3D operational area, a heading direction may be 45° (i.e., showing that the vehicle is oriented diagonally in the 3D operational area), a speed may be 15 m/s, and a yaw rate may be 2°/sec. At a second time T2, the at least one processor may generate a next 3D depth map using updated LiDAR data and plurality of images. Upon comparison of the 3D depth maps from T1 and T2, the at least one processor may detect changes in the vehicle's state, such as updated position coordinates may be 15.0 m, 7.0 m, 0.0 m, the heading direction may change to 50°, the speed may be changed to 16m/s, and the yaw rate may be 3°/s. By updating these state parameters of the vehicle, the at least one processor ensures a precise tracking of the vehicle's position, motion, and orientation within the 3D operational area. This enables applications such as collision avoidance, path prediction, or real-time decision-making in operation of an autonomous vehicle.

A technical effect of the aforementioned feature is that the system enables an accurate real-time tracking and state updates of the plurality of objects within the 3D operational area, facilitating improved situational awareness and decision-making for dynamic environments. This enhances the reliability and efficiency of applications such as an autonomous navigation and collision avoidance.

Optionally, the at least one processor is further configured to send the state of the plurality of objects, to a vehicle control system which controls navigation of the autonomous vehicle within the 3D operational area, the state of the plurality of objects being utilized by the vehicle control system for obstacle and collision avoidance during said navigation. In this regard, the term *"vehicle control system"* refers to an integrated computational and electronic system that is responsible for managing and executing tasks related to movement, navigation, operation, and similar, of the autonomous vehicle within the 3D operational area. Herein, the vehicle control system is communicably coupled to the at least one processor. Once the state of the plurality of objects is determined, the at least one processor sends this information to the vehicle control system. The transmission may occur via a secure and low-latency communication protocol such as Controller Area Network (CAN), ethernet, and similar, to ensure real-time updates. The vehicle control system integrates the received state data into its navigation algorithms to maintain situational awareness and optimize an operation of the autonomous vehicle. The received state data which includes the position coordinates, the heading direction, the speed, and the yaw rate of each object is processed to update the 3D depth map of the autonomous vehicle within the 3D operational area. This map is used to analyse current spatial relationship between the autonomous vehicle and the surrounding objects, allowing the vehicle control system to predict movement of the plurality of objects. In this regard, the vehicle control system tracks motion of the plurality of objects using predictive modelling techniques. For instance, the heading direction and the speed of a detected vehicle may indicate whether said objects may cross a path of the autonomous vehicle. Based on predicted states of surrounding objects, the vehicle control system recalculates an optimal path. For example, if an obstacle may be detected within the autonomous vehicle's planned path, the vehicle control system may generate an alternative route that avoids said obstacle. The vehicle control system compares predicted trajectory of the autonomous vehicle with the updated states of the plurality of objects. Herein, if a potential collision may be identified, the vehicle control system may trigger corrective actions, such as braking, steering adjustments, acceleration, or similar, to safely avoid said obstacle. Moreover, the vehicle control system operates in a feedback loop, continuously receiving an updated state of the plurality of objects. It will be appreciated that by incorporating this real-time state data into its navigation algorithms, the vehicle control system ensures safe, efficient, and adaptive navigation within the 3D operational area, even in complex and unpredictable scenarios. A technical effect of the aforementioned feature is that the vehicle control system ensures safe and efficient navigation by dynamically identifying and avoiding obstacles, thus reducing likelihood of collisions and enabling reliable operation of the autonomous vehicle within complex 3D environments.

The at least one processor is further configured to process the LiDAR data received from the plurality of LiDAR sensors, prior to employing the at least one data fusion algorithm, wherein when processing the LiDAR data, the at least one processor is configured to:
generate a merged 3D point cloud by combining the plurality of 3D point clouds according to pre-known extrinsic calibration of the plurality of LiDAR sensors;
downsample the merged 3D point cloud using a voxel filter and store the merged 3D point cloud in a predefined data structure;
detect a background, static points, and dynamic points in the merged 3D point cloud, by comparing the merged 3D point cloud with at least one historical merged 3D point cloud;
subtract the background and the static points from the merged 3D point cloud; and
identify a set of dynamic objects using the merged 3D point cloud by employing at least one point clustering technique to generate one or more clusters of the dynamic points.

In this regard, the term *"merged 3D point cloud"* refers to a unified representation of 3D data points derived from the plurality of LiDAR sensors, that are combined into a single cohesive set. Moreover, the *"pre-known extrinsic calibration"* refers to a set of parameters that define relative positioning and orientation of the plurality of LiDAR sensors with respect to a global coordinate system or to each other in 3D space. The pre-known extrinsic calibration includes translation (i.e., spatial displacement) and rotation (i.e., an angular alignment) between coordinate frames of each LiDAR sensor. Herein, the at least one processor is configured to combine the LiDAR data from the plurality of LiDAR sensors to form the merged 3D point cloud. This is done by taking into account the pre-known extrinsic calibration of the plurality of LiDAR sensors, which defines their relative positioning and orientation in the 3D space. Each LiDAR sensor has its own local co-ordinate system and so generates its corresponding point cloud in its local co-ordinate system. The merged 3D point cloud is generated by aligning points and local co-ordinate systems of the plurality of 3D point clouds into a single global coordinate space. The extrinsic calibration of the plurality of LiDAR sensors provides a relative pose of the plurality of LiDAR sensors, which enables accurate point cloud combining. It will be appreciated that by combining individual point clouds from the plurality of LiDAR sensors into a unified representation, the system provides a more complete and detailed view of the 3D operational area, which is crucial for effective object detection and tracking.

Moreover, the term *"voxel filter"* refers to a data processing technique commonly used in context of 3D point cloud data, particularly for downsampling or reducing density of 3D point cloud while maintaining its geometric structure. The voxel filter works by dividing 3D space into a regular grid of cubic cells, known as voxels, where each voxel represents a small volume element in the 3D space. The voxel filter then processes the 3D point cloud by grouping all points that fall within same voxel and replaces them with a single representative point, such as centroid, mean, or the point closest to the voxel's center. This reduces the number of points in the 3D point cloud, simplifying data for further processing while retaining the overall spatial characteristics of the original 3D model. Herein, to reduce computational load and data storage requirements, the at least one processor down-samples the merged 3D point cloud using the voxel filter. The voxel filter creates a grid of predefined size (voxels) and averages data within each voxel to represent points in a more compact form. The downsampled data is then stored in the predefined data structure for further processing. Herein, the term *"predefined data structure"* refers to an organized format in which the processed and downsampled 3D point cloud data is stored for an efficient retrieval and further analysis. The predefined data structure is designed to facilitate operations such as point storage, indexing, and spatial queries in a computationally efficient manner. Beneficially, voxel filters are particularly useful for reducing computational complexity and memory requirements when working with large 3D point clouds, while still preserving essential features for applications such as object detection, scene reconstruction, and similar.

Moreover, the at least one processor is configured to compare the merged 3D point cloud with the at least one historical merged 3D point cloud. By comparing current and historical data, the at least one processor can differentiate between static points (i.e., background objects, fixed objects, and similar) and dynamic points (i.e., objects that have moved, changed position, or similar). This step is essential for filtering out irrelevant objects and isolating only the dynamic objects. In this regard, once static and background points are identified, the at least one processor is configured to subtract them from the merged 3D point cloud, leaving only the points representing dynamic objects, which are primary focus for identification and tracking. Then, the at least one processor is configured to employ the at least one point clustering technique to group the dynamic points into one or more clusters. These clusters represent individual dynamic objects in the 3D space, allowing the system to focus on detecting and tracking moving objects within the 3D operational area. It will be appreciated that the ability to distinguish between the static points and the dynamic points through the comparison with the historical 3D point clouds allows the system to focus on moving objects of interest. By subtracting the static objects from the merged 3D point cloud, the at least one processor can effectively isolate dynamic elements, which is vital for real-time decision-making in navigation and collision avoidance.

A technical effect of the aforementioned feature is that the LiDAR data becomes easy to process during data fusion as excessive non-useful data is removed by the aforesaid steps (i.e., data fusion requires less computational resources). Also, processed LiDAR data with identified dynamic objects, when used to generate the 3D depth map, enables these dynamic objects to also be identified accurately using the 3D depth map. These objects do not get missed out and are recognized reliably, thereby enabling a safe navigation for the autonomous vehicle.

Optionally, the at least one point clustering technique comprises at least one of: a clustering algorithm, a ghost object identification technique, an outlier removal technique, a convex hull fitting technique. In this regard, the term *"clustering algorithm"* refers to a computational technique used to group points in a dataset, such as in the 3D point cloud, based on specific criteria like proximity, density, or similar. Herein, the at least one processor is configured to employ the clustering algorithm to group the dynamic points in the merged 3D point cloud into distinct clusters, where each cluster corresponds to an individual object in the 3D operational area. It will be appreciated that employing the clustering algorithm improves computational efficiency by grouping data points into meaningful clusters, thereby reducing the complexity of subsequent processing steps. For example, a clustering algorithm like Density-Based Spatial Clustering of Applications with Noise (DBSCAN) groups points based on density thresholds, while k-means clustering partitions points into predefined clusters based on their distance from centroids. These algorithms allow for efficient segmentation of objects in 3D space, forming foundation for object detection and tracking.

Moreover, the term *"ghost object identification technique"* refers to a computational method used to detect and eliminate ghost objects in the merged 3D point cloud data. Herein, the ghost objects are spurious or non-existent entities that appear in said data due to LiDAR sensor noise, reflections, occlusions, or similar. The at least one processor is configured to employ said technique by analysing characteristics of the point cloud clusters, such as spatial consistency, velocity, and historical behavior, to differentiate between real and ghost objects. It will be appreciated that employing the ghost object identification technique significantly enhances the reliability of object detection by eliminating spurious data, thereby improving precision of tracking the dynamic objects. For example, unrealistic motion patterns, such as objects moving against physical constraints or disappearing suddenly, may be flagged as ghost objects. Thus, removing ghost objects ensures the accuracy and reliability of object detection.

Moreover, the term *"outlier removal technique"* refers to a data filtering process that identifies and eliminates points in a dataset that deviate significantly from an expected distribution or pattern. Herein, the at least one processor is configured to employ the outlier removal technique to refine the merged 3D point cloud by removing an erroneous or irrelevant point before clustering. Methods such as statistical filtering, nearest-neighbor analysis, or distance-based thresholding can be used to identify outliers. It will be appreciated that employing the outlier removal technique reduces noise in the merged 3D point cloud, resulting in more accurate clustering and higher-quality object representations. For example, points that are too far from their neighboring points or fall outside a predefined threshold can be classified as outliers. This improves the quality of the 3D point cloud and ensures that clustering algorithms operate on accurate and meaningful data.

Moreover, the term *"convex hull fitting technique"* refers to an algorithmic process used to determine an outer boundary of a set of points in a dataset. Herein, the at least one processor is configured to employ the convex hull fitting technique to compute the convex hull of each cluster of dynamic points in the merged 3D point cloud. The convex hull represents smallest convex shape that fully encloses the points in a cluster, providing a precise geometric outline of the object. It will be appreciated that the convex hull fitting technique enables precise geometric modelling of objects, enhancing ability of the system to plan paths and avoid obstacles with greater accuracy. For example, algorithms such as Quickhull or Graham's scan are commonly used for the convex hull fitting. The convex hull fitting technique helps to define spatial boundaries and dimensions of the dynamic objects, thereby facilitating an accurate object representation for tasks such as path planning and obstacle avoidance. The aforesaid types of the at least one point clustering technique are well-known in the art.

A technical effect of the aforesaid techniques is that such techniques enable accurate identification of dynamic objects. Accurate identification of dynamic objects is important for safe navigation, as dynamic objects can obstruct a path of the autonomous vehicle, can collide with the autonomous vehicle, or similar.

The present disclosure also relates to the second aspect as described above. Various embodiments and variants disclosed above, with respect to the aforementioned first aspect, apply *mutatis mutandis* to the second aspect.

Prior to employing the at least one data fusion algorithm, wherein when processing the LiDAR data, the method further comprising:
generating a merged 3D point cloud by combining the plurality of 3D point clouds according to pre-known extrinsic calibration of the plurality of LiDAR sensors;
downsampling the merged 3D point cloud using a voxel filter and store the merged 3D point cloud in a predefined data structure;
detecting a background, static points, and dynamic points in the merged 3D point cloud, by comparing the merged 3D point cloud with at least one historical merged 3D point cloud;
subtracting the background and the static points from the merged 3D point cloud; and
identifying a set of dynamic objects using the merged 3D point cloud by employing at least one point clustering technique to generate one or more clusters of the dynamic points.

### DETAILED DESCRIPTION OF THE DRAWINGS

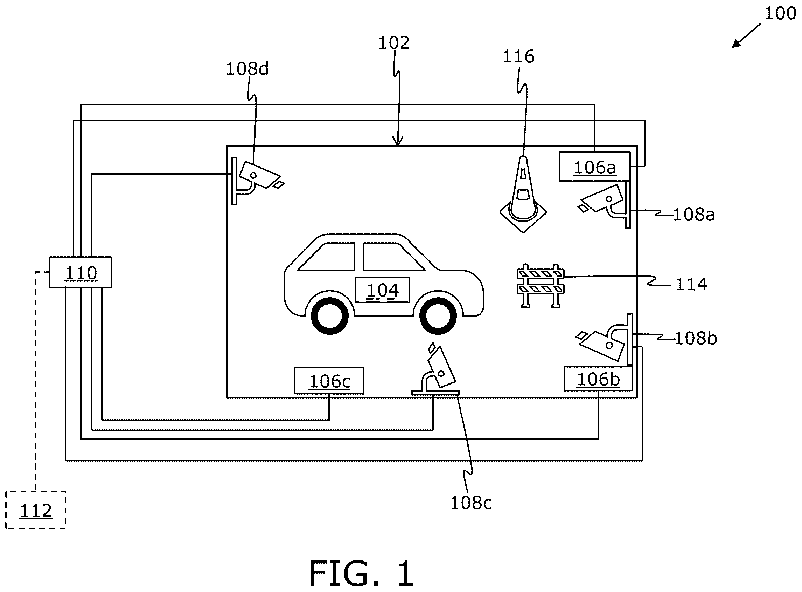

Referring to FIG. 1, illustrated is a real-world environment **100** where a system for generating a three-dimensional (3D) depth map of a 3D operational area **102** of an autonomous vehicle **104** is used, in accordance with an embodiment of the present disclosure. With reference to FIG. 1, the system comprises a plurality of Light Detection and Ranging (LiDAR) sensors (for example, depicted as **106a, 106b,** and **106c),** at least one camera (for example, depicted as **108a, 108b, 108c,** and **108d)** and at least processor (for example, depicted as a processor **110).** Optionally, the system further comprises a vehicle control system **112** which controls navigation of the autonomous vehicle **104.** Herein, the processor **110** is communicably coupled to the plurality of LiDAR sensors **106a-c,** the at least one camera **108a-d** and optionally, to the vehicle control system **112.** The processor **110** is configured to perform various operations, as described earlier with respect to the aforementioned first aspect. Optionally, the processor **110** is further configured to identify a plurality of objects (for example, for the sake of clarity, such as a barrier **114,** a traffic cone **116** are shown) using the 3D depth map by employing at least one object detection technique, the plurality of objects comprising the autonomous vehicle **104** and at least one other object (for example, depicted as **114,** and **116)** in the 3D operational area **102.** Optionally, the processor **100** is further configured to send state of the plurality of objects (i.e., a state of the autonomous vehicle **104,** the barrier **114,** and the traffic cone **116),** to the vehicle control system **112** which controls navigation of the autonomous vehicle **104** within the 3D operational area **102,** the state of the plurality of objects being utilized by the vehicle control system **112** for obstacle and collision avoidance during said navigation.

FIG. 1 is merely an example, which should not unduly limit the scope of the claims herein. A person skilled in the art will recognize many variations, alternatives, and modifications of embodiments of the present disclosure.

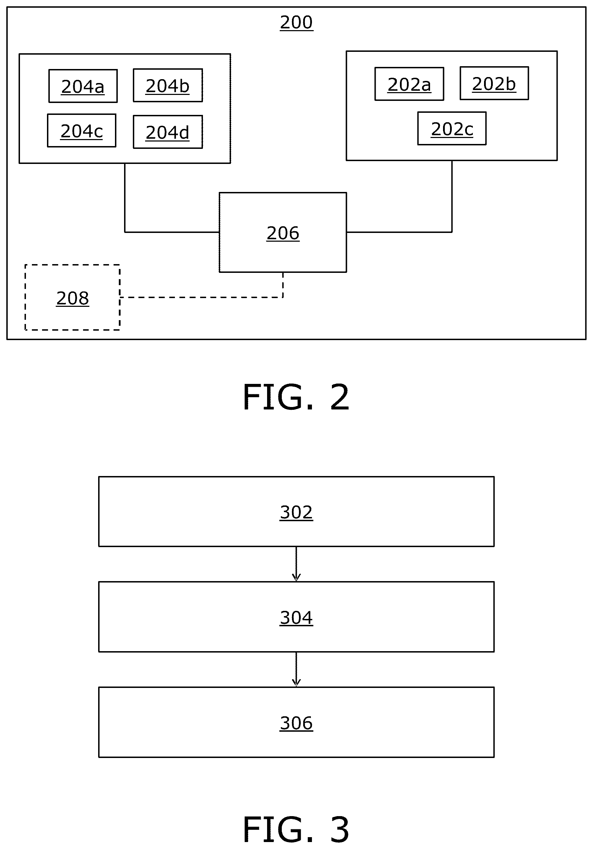

Referring to FIG. 2, illustrated is a block diagram of an architecture of a system **200** for generating a three-dimensional (3D) depth map of a 3D operational area of an autonomous vehicle, in accordance with an embodiment of the present disclosure. Herein, the system **200** comprises a plurality of Light Detection and Ranging (LiDAR) sensors (for example, depicted as **202a, 202b,** and **202c),** at least one camera (for example, depicted as **204a, 204b, 204c** and **204d),** and at least one processor (for example, depicted as a processor **206).** Optionally, the system **200** further comprises a vehicle control system **208.** The processor **206** is communicably coupled to the plurality of LiDAR sensors **202a-c,** the at least one camera **204a-d** and optionally, to the vehicle control system **208.**

It may be understood by a person skilled in the art that the FIG. 2 includes a simplified architecture of a system **200** for sake of clarity, which should not unduly limit the scope of the claims herein. The person skilled in the art will recognize many variations, alternatives, and modifications of embodiments of the present disclosure.

Referring to FIG. 3, illustrated are steps of a method for generating a three-dimensional (3D) depth map of a 3D operational area of an autonomous vehicle, in accordance with an embodiment of the present disclosure. At step **302,** Light Detection and Ranging (LiDAR) data generated by plurality of LiDAR sensors is received, in real-time, wherein the LiDAR data comprises a plurality of 3D point clouds of the 3D operational area. At step **304,** a plurality of images captured by at least one camera is received, in real-time, wherein the plurality of images visually represent the 3D operational area. At step **306,** at least one data fusion algorithm is employed to integrate the LiDAR data and the plurality of images, in real-time, for generating the 3D depth map of the 3D operational area.

The aforementioned steps are only illustrative and other alternatives can also be provided where one or more steps are added, one or more steps are removed, or one or more steps are provided in a different sequence without departing from the scope of the claims herein.

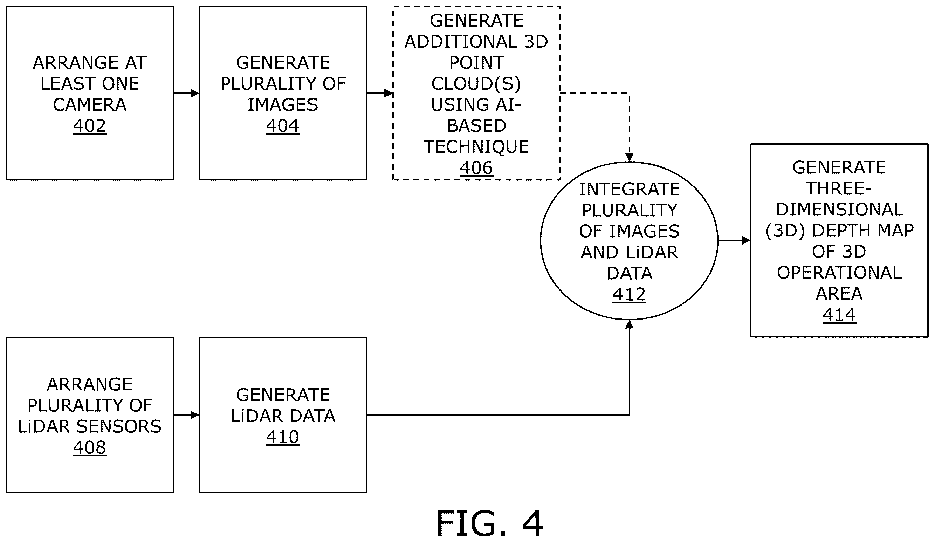

Referring to FIG. 4, illustrated is an exemplary process flow in a system for generating a three-dimensional (3D) depth map of a 3D operational area, in accordance with an embodiment of the present disclosure. As shown, at step **402,** at least one camera is arranged within the 3D operational area. At step **404,** plurality of images are being captured by the at least one camera, in real-time, wherein the plurality of images visually represent the 3D operational area. At step, **406,** optionally, at least one additional 3D point cloud is generated from the plurality of images using an artificial intelligence (AI)-based technique. At step **408,** plurality of Light Detection and Ranging (LiDAR) sensors are arranged within the 3D operational area. At step **410,** LiDAR data is received from the plurality of LiDAR sensors, wherein the LiDAR data comprises a plurality of 3D point clouds of the 3D operational area. At step **412,** the plurality of images and the LiDAR data are integrated. At step **414,** a 3D depth map (i.e., a high-resolution data) of the 3D operational area is generated.

FIG. 4 is merely an example, which should not unduly limit the scope of the claims herein. A person skilled in the art will recognize many variations, alternatives, and modifications of embodiments of the present disclosure.

## Claims

1. A system (200) for generating a three-dimensional (3D) depth map of a 3D operational area (102) of an autonomous vehicle (104), the system comprising:
a plurality of Light Detection and Ranging (LiDAR) sensors (106a-c, 202a-c) installed in an infrastructure within the 3D operational area, and arranged such that an entirety of the 3D operational area is covered by sensing zones of one or more of the LiDAR sensors;
at least one camera (108a-d, 204a-d) arranged within the 3D operational area; and
at least one processor (110, 206) configured to:
receive LiDAR data generated by the plurality of LiDAR sensors, in real-time, wherein the LiDAR data comprises a plurality of 3D point clouds of the 3D operational area;
receive a plurality of images captured by the at least one camera, in real-time, wherein the plurality of images visually represent the 3D operational area;
employ at least one data fusion algorithm to integrate the LiDAR data and the plurality of images, in real-time, for generating the 3D depth map of the 3D operational area;
**characterised in that** the at least one processor (110, 206) is further configured to process the LiDAR data received from the plurality of LiDAR sensors (106a-c, 202a-c), prior to employing the at least one data fusion algorithm, wherein when processing the LiDAR data, the at least one processor is configured to:
generate a merged 3D point cloud by combining the plurality of 3D point clouds according to pre-known extrinsic calibration of the plurality of LiDAR sensors;
downsample the merged 3D point cloud using a voxel filter and store the merged 3D point cloud in a predefined data structure;
detect a background, static points, and dynamic points in the merged 3D point cloud, by comparing the merged 3D point cloud with at least one historical merged 3D point cloud;
subtract the background and the static points from the merged 3D point cloud; and
identify a set of dynamic objects using the merged 3D point cloud by employing at least one point clustering technique to generate one or more clusters of the dynamic points.

2. A system (200) according to claim 1, wherein the at least one data fusion algorithm comprises at least one of: a Kalman filter, a Bayesian network-based inference algorithm, a deep learning-based algorithm, a histogram-based algorithm.

3. A system (200) according to claim 1, wherein the 3D depth map is a fused 3D point cloud whose points include at least depth and colour information.

4. A system (200) according to any of the preceding claims, wherein the 3D depth map of the 3D operational area (102) is in form of one of: a 3D voxel grid, a two-dimensional (2D) depth image, a 3D mesh, an octree, a hash table.

5. A system (200) according to any of the preceding claims, wherein the at least one processor (110, 206) is configured to continuously update the 3D depth map, in real time, during a time period of movement of the autonomous vehicle (104) within the 3D operational area (102).

6. A system (200) according to any of the preceding claims, wherein the at least one processor (110, 206) is further configured to identify a plurality of objects (104, 114, 116) using the 3D depth map by employing at least one object detection technique, the plurality of objects comprising the autonomous vehicle (104) and at least one other object (114, 116) in the 3D operational area (102).

7. A system (200) according to claim 6, wherein the at least one processor (110, 206) is further configured to:
determine a state of the plurality of objects (104, 114, 116), corresponding to a first time, wherein the state of each object comprises position coordinates, heading direction, a speed, and a yaw rate, of said object;
generate a next 3D depth map using next LiDAR data and a next plurality of images, corresponding to a second time that is later than the first time; and
update the state of the plurality of objects, by comparing the 3D depth map with the next 3D depth map.

8. A system (200) according to claim 7, wherein the at least one processor (110, 206) is further configured to send the state of the plurality of objects (104, 114, 116), to a vehicle control system (112, 208) which controls navigation of the autonomous vehicle (104) within the 3D operational area (102), the state of the plurality of objects being utilized by the vehicle control system for obstacle and collision avoidance during said navigation.

9. A system (200) according to any of claims 6-8, wherein the at least one other object (114, 116) comprises at least one of: an object whose bounding box has at least one dimension less than a first threshold, an object whose bounding box volume is less than a second threshold, an object whose thickness is less than a third threshold, an object which is at least partially made of a low-reflectivity material.

10. A system (200) according to claim 1, wherein the at least one point clustering technique comprises at least one of: a clustering algorithm, a ghost object identification technique, an outlier removal technique, a convex hull fitting technique.

11. A system (200) according to any of the preceding claims, wherein the at least one camera is implemented as a plurality of cameras (108a-d, 204a-d), and wherein at least one camera (108a, 108b) amongst the plurality of cameras is co-located with at least one LiDAR sensor (106a, 106b) amongst the plurality of LiDAR sensors (106a-c, 202a-c), within the 3D operational area (102).

12. A system (200) according to any of the preceding claims, wherein the at least one processor (110, 206) is further configured to generate at least one additional 3D point cloud from the plurality of images, using an artificial intelligence (AI)-based technique, and wherein the at least one additional 3D point cloud is also integrated with the LiDAR data and the plurality of images for generating the 3D depth map of the 3D operational area.

13. A system (200) according to claim 12, wherein the AI-based technique is one of: a Dense Prediction Transformer (DPT)-based monocular depth estimation algorithm, a diffusion-based point cloud generative algorithm, a flow-based generative model, a Generative Adversarial Network (GAN)-based model, a Proximity Attention Point Rendering (PAPR) algorithm, a stereo vision-based algorithm.

14. A system (200) according to claim 12 or 13, wherein the at least one processor (110, 206) is further configured to perform at least one of:
identify a plurality of objects using the 3D depth map;
categorize the plurality of objects into one or more categories;
using the AI-based technique.

15. A method for generating a three-dimensional (3D) depth map of a 3D operational area (102) of an autonomous vehicle (104), wherein the method comprising:
receiving LiDAR data generated by a plurality of LiDAR sensors (106a-c, 202a-c) installed in an infrastructure within the 3D operational area, the LiDAR sensors being arranged such that an entirety of the 3D operational area is covered by sensing zones of one or more of the LiDAR sensors, in real-time, wherein the LiDAR data comprising a plurality of 3D point clouds of the 3D operational area;
receiving a plurality of images captured by at least one camera (108a-d, 204a-d) arranged within the 3D operational area, in real-time, wherein the plurality of images visually represent the 3D operational area;
employing at least one data fusion algorithm to integrate the LiDAR data and the plurality of images, in real-time, for generating the 3D depth map of the 3D operational area;
**characterised in that** prior to employing the at least one data fusion algorithm, wherein when processing the LiDAR data, the method further comprising:
generating a merged 3D point cloud by combining the plurality of 3D point clouds according to pre-known extrinsic calibration of the plurality of LiDAR sensors;
downsampling the merged 3D point cloud using a voxel filter and store the merged 3D point cloud in a predefined data structure;
detecting a background, static points, and dynamic points in the merged 3D point cloud, by comparing the merged 3D point cloud with at least one historical merged 3D point cloud;
subtracting the background and the static points from the merged 3D point cloud; and
identifying a set of dynamic objects using the merged 3D point cloud by employing at least one point clustering technique to generate one or more clusters of the dynamic points.
